# EUROPÄISCHE PATENTSCHRIFT

(11) **EP 3 019 377 B1**
(45) Veröffentlichungstag und Bekanntmachung des Hinweises auf die Patenterteilung: **08.08.2018**
(21) Anmeldenummer: 14736666.0
(22) Anmeldetag: 20.06.2014
(51) Int. Cl.: B60W 30/18

(54) **STEUERSYSTEM SOWIE VERFAHREN ZUM BETREIBEN EINES KRAFTFAHRZEUGS**
CONTROL SYSTEM AND METHOD FOR OPERATING A MOTOR VEHICLE
SYSTÈME DE COMMANDE ET PROCÉDÉ PERMETTANT DE FAIRE FONCTIONNER UN VÉHICULE AUTOMOBILE

(30) Priorität: 08.07.2013 DE 102013213302
(43) Veröffentlichungstag der Anmeldung: 18.05.2016
(73) Patentinhaber: Volkswagen Aktiengesellschaft, 38440 Wolfsburg (DE)
(72) Erfinder: KONERT, Andreas, 51145 Köln (DE); STEBNER, Frank, 38108 Braunschweig (DE); RIEDEL, Stephan, 38448 Wolfsburg (DE); KACZOR, Benjamin, 38527 Meine (DE); WEISS, Norbert, 38173 Sickte (DE)
(86) Internationale Anmeldenummer: PCT/EP2014/063002
(87) Internationale Veröffentlichungsnummer: WO 2015/003885

(56) Entgegenhaltungen:
- WO-A1-2013/045584
- DE-A1-102011 004 140

## Beschreibung

Die Erfindung betrifft ein Steuersystem zum Betreiben eines Kraftfahrzeugs gemäß dem Oberbegriff von Patentanspruch 1. Sie betrifft darüber hinaus ein Verfahren zum Betreiben eines mit einem solchen Steuersystem ausgestatteten Kraftfahrzeugs.

Hybrid- und Elektrofahrzeuge haben mindestens eine elektrische Maschine im Antriebsstrang integriert. Diese elektrische Maschine kann in einem Generatorbetrieb in Abhängigkeit der Drehzahl und des Ladezustands der Batterie ein Bremsmoment an zumindest einem zugeordnetem Rad erzeugen. Verzögerungsschwankungen der elektrischen Maschine werden hier entsprechend gesetzlicher Vorschriften von einer konventionellen hydraulischen Bremsanlage automatisch ausgeglichen. Ein Wechsel des elektrischen und hydraulischen Verzögerungsanteils während einer Bremsung wird Brake Blending, also Bremsen-Blenden, genannt. Ein Ziel hierbei ist, dass die Kräfte und Wege am Bremspedal immer gleich sind, unabhängig davon, ob elektrisch oder über das konventionelle Bremssystem verzögert wird. Im Stand der Technik erfolgt die Koordination von elektrischem und hydraulischem Verzögerungsanteil über ein zusätzliches Bauteil, nämlich einer zentralen Steuereinheit. Diese Steuereinheit ist im Allgemeinen einem Fahrdynamikregelungsmodul zugeordnet, d.h. in dem gleichen Gehäuse angeordnet und elektrisch mit dem Fahrdynamikregelungsmodul gekoppelt, wodurch das Fahrdynamikmodul baulich und elektrisch, also in seiner Logikfunktion, speziell an die zentrale Steuereinheit angepasst werden muss oder alternativ eine an das entsprechende Fahrdynamikmodul angepasste Steuereinheit verbaut werden muss. Die Verwendung von Standardbauteilen ist also ohne weiteres nicht möglich.

So wird beispielsweise in der US 5,511,859 eine Methode beschrieben, bei der ein zentrales Bremskontrollelement einen Bremswunsch eines Fahrers, einzelne Drehzahlen von Fahrzeugrädern und das verfügbare elektrische Bremsmoment erfasst.
Das zentrale Bremskontrollelement regelt dann eine Aufteilung in elektrisch und hydraulisch erbrachten Verzögerungsanteil. Gleichzeitig übernimmt es die Funktion eines Antiblockiersystems.

Die DE 10 2005 059 373 A1 beschreibt ein Verfahren zur Steuerung eines Bremssystems eines Kraftfahrzeugs, bei welchem ebenfalls ein Brake Blen ding erfolgt. Hierbei wird ein situationsabhängig ermitteltes Gesamtsollbremsmoment zunächst rein elektrisch über einen Generator erbracht, und hydraulische Bremsen werden zugeschaltet, wenn das Gesamtsollbremsmoment das Bremsmoment des Generators um eine vorgegebenen maximale Bremsmomentdifferenz überschreitet.

In der US 6,155,365 ist ein Bremssystem beschrieben, bei welchem eine Kontrolleinheit ein angefordertes Bremsmoment mit einem verfügbaren elektrischen Bremsmoment vergleicht und elektrisch bzw. hydraulisch erbrachtes Bremsmoment entsprechend steuert.

Die WO 2013 045 584 A1 beschreibt ein rekuperatives Bremssystem für ein Kraftfahrzeug mit einer Reibungsbremsensteuereinrichtung, einem Zustandsbeobachter, einer Bremsschlupfregelung sowie einer Momentenverteilung. Mit dem rekuperativen Bremssystem ist ein elektrischer Antrieb mit einer Elektroantriebsteuereinrichtung gekoppelt, wobei eine zugehörige elektrische Maschine zumindest zeitweise als Generator angesteuert werden kann. Bei einem Bremsvorgang wird eine Verzögerungsanforderung als Eingangssignal für das rekuperative Bremssystem genutzt, indem die Bremsschlupfregelung aus der Verzögerungsanforderung Sollbremsmomente für die einzelnen Räder ermittelt.

Die DE 10 2011 004 140 A1 offenbart ein Bremssystem für ein Kraftfahrzeug mit einem Bremskraftverstärker zur Verstärkung einer Bremskraft und einer Bremsdruckbereitstellungseinrichtung zur Bereitstellung von Bremsdruck mittels eines Bremsmediums.

Die vorliegende Erfindung hat zur Aufgabe, ein Steuersystem zum Betreiben eines Kraftfahrzeugs bereitzustellen, welches eine effiziente Rekuperation bei niedrigen Kosten, Entwicklungsaufwand und Gewicht ermöglicht. Die Erfindung hat ebenfalls zur Aufgabe, ein Verfahren zum Betreiben eines Kraftfahrzeugs mit einem solchen Steuersystem bereitzustellen.

Diese Aufgabe wird erfindungsgemäß durch ein Steuersystem bzw. ein Verfahren gemäß den unabhängigen Patentansprüchen gelöst. Vorteilhafte Ausführungen der Erfindung sind Gegenstand der abhängigen Patentansprüche, der Beschreibung und der Figuren.

Um eine besonders effektive Rekuperation zu erzielen, sind in einem erfindungsgemäßen Steuersystem zum Betreiben eines Kraftfahrzeugs zunächst drei Elemente vorgesehen: Ein Fahrdynamikmodul, welches ausgelegt ist, das Kraftfahrzeug zu stabilisieren, eine elektrische Maschine, die in einem Rekuperationsmodus betreibbar ist, in welchem ein veränderlicher Betrag an elektrischer Leistung rekuperierbar ist, und ein Motorsteuergerät, welches ausgelegt ist, die elektrische Maschine in dem Rekuperationsmodus anzusteuern.

Mittels des Motorsteuergeräts wird also von der elektrischen Maschine wiedergewonnene elektrische Leistung, also die elektrische Leistung, die durch die elektrische Maschine dem Kraftfahrzeug wieder zugeführt wird, gesteuert. Hierbei ist das Motorsteuergerät und die elektrische Maschine in einem Vorwärtszweig eines ersten Regelkreises angeordnet, wobei eine Eingangsgröße des ersten Regelkreises, und damit des Motorsteuergeräts, mindestens eine die Geschwindigkeit des Kraftfahrzeugs beeinflussende Signalgröße darstellt. Eine solche Signalgröße ist insbesondere eine Information über eine Gaspedalstellung oder eine sonstige Signalgröße, welche eine beizubehaltende oder zu verändernde Geschwindigkeit repräsentiert, beispielsweise von einem Abstandsregeltempomat stammend. Insbesondere können also auch mehrere Signalgrößen, welche die Geschwindigkeit des Kraftfahrzeugs beeinflussen, Eingangsgrößen des ersten Regelkreises darstellen.

Im Gegensatz zum Stand der Technik, und damit Wesentlich für die Erfindung, ist, dass das Fahrdynamikmodul in einem Rückwärtszweig des ersten Regelkreises angeordnet ist. Die Erfindung hat so gegenüber dem Stand der Technik eine ganze Reihe von Vorteilen: Zum einen kann so das Motorsteuergerät selbständig einen Rekuperationsmodus der elektrischen Maschine einleiten und steuern. Das heißt, das Motorsteuergerät kann allein aufgrund der ihm vorliegenden Daten ohne weitere Kommunikation und Rückfrage bei einer übergeordneten Einheit, wie beispielsweise im Stand der Technik bei dem Fahrdynamikmodul nebst zugeordneter zentraler Steuereinheit, die elektrische Maschine veranlassen, elektrische Energie zu rekuperieren. Somit kann besonders flexibel und agil, also effizient Energie rekuperiert werden. Auch ist für die Rekuperation so keine zusätzliche Steuereinheit mehr erforderlich. Das hat nicht nur eine Gewichtsersparnis zur Folge, sondern macht auch die oben erwähnten Hardware- und Logikanpassungen der Geräte untereinander obsolet und vereinfacht allgemein die Architektur des Systems und reduziert somit Entwicklungskosten und Störanfälligkeit. Das vorgestellte System kann zudem kostengünstig mit Standard-Komponenten realisiert werden, welche hierfür lediglich in ihrer Steuerung und/oder Kommunikation angepasst werden müssen. Ferner muss das Fahrdynamikmodul so nur bei einer eventuell durch den Rekuperationsmodus erfolgenden Destabilisierung des Kraftfahrzeugs aktiv eingreifen. Somit werden die Kommunikationswege nur in diesem Fall belastet und Ressourcen in diesem Bauteil geschont.

Durch die Ressourceneinsparung innerhalb des Bauteils ist eine kostensparende Bauteilgleichheit z.B. mit einem Projekt mit ausschließlich konventionellem, hydraulischem Bremssystem möglich. Beide Elemente, nämlich das Motorsteuergerät und auch das Fahrdynamikmodul, übernehmen so in dem ersten Regelkreis genau die Aufgaben, auf die sie baulich ausgelegt sind: Das Fahrdynamikmodul wird aktiv, sobald die Stabilität des Kraftfahrzeugs geregelt werden muss, und das Motorsteuergerät wird aktiv, sobald die Geschwindigkeit des Kraftfahrzeugs beeinflusst werden soll.

In einer vorteilhaften Ausführungsform der Erfindung ist es vorgesehen, dass der erste Regelkreis ausgebildet ist, in einem Betriebsmodus betrieben zu werden, in dem durch ein Verändern der im Rekuperationsmodus der elektrischen Maschine zurückgewonnenen Leistung eine Ausgangsgröße des ersten Regelkreises geregelt wird. Das hat den Vorteil, dass so situationsabhängig die maximale Rekuperationsleistung, welche die Stabilität des Kraftfahrzeugs nicht gefährdet, erbracht werden kann.

Insbesondere ist vorgesehen, dass vor dem Vorwärtszweig des ersten Regelkreises ein Bremskraftverstärker angeordnet ist.

Dieser Bremskraftverstärker ist dann vorzugsweise dazu ausgelegt, dem Motorsteuergerät eine Eingangsgröße zur Verfügung zu stellen, welche zumindest einen Teil eines von einem Fahrer gewünschten Bremsmoments repräsentiert. Das hat den Vorteil, dass auch eine Rekuperation im Bremsbetrieb erfolgen kann, also eine gezielte, durch den Fahrer initiierte Rekuperation stattfinden kann.

In einer weiteren Ausführungsform der Erfindung ist vorgesehen, dass das Motorsteuergerät ausgelegt ist, eine Information über ein mittels des Rekuperationsmodus der elektrischen Maschine erzielbares elektrisches Bremsmoment an den Bremskraftverstärker zu übermitteln. Das hat den Vorteil, dass der Bremskraftverstärker so nicht ein elektrisches Bremsmoment von dem Motorsteuergerät anfordern wird, welches von diesem nicht erbringbar ist. Somit wird ein aufwändiges und möglicherweise verzögertes Nachsteuern vermieden.

Es kann ferner vorgesehen sein, dass der Bremskraftverstärker ausgelegt ist, auch dem Fahrdynamikmodul eine Eingangsgröße zur Verfügung zu stellen, welche zumindest einen Teil eines von einem Fahrer gewünschten Bremsmoments repräsentiert. Das hat den Vorteil, dass das Fahrdynamikmodul einen Bremswunsch des Fahrers an die Radbremsen weiterleiten kann sowie den Bremswunsch bei einem Stabilisieren des Kraftfahrzeugs und bei einem Bremswunsch des Fahrers das Stabilisieren des Kraftfahrzeugs mit berücksichtigen kann.

In einer bevorzugten Ausführungsform ist das Fahrdynamikmodul in einem Vorwärtszweig eines zweiten Regelkreises angeordnet, wobei eine Eingangsgröße des zweiten Regelkreises zumindest ein Teil eines von einem Fahrer gewünschten Bremsmoments repräsentiert. Insbesondere dient der zweite Regelkreis dem Regeln eines über Radbremsen erbrachten hydraulischen Bremsmoments. Das hat den Vorteil, dass das Fahrdynamikmodul einen Teil des von einem Fahrer gewünschten Bremsmoments, insbesondere das hydraulische Bremsmoment, regeln kann.

In einer vorteilhaften Ausführungsform der Erfindung ist der Rekuperationsmodus der elektrischen Maschine und auch das Motorsteuergerät derart ausgebildet, dass im Rekuperationsmodus nicht zwischen einer selbständigen, unmittelbaren Ansteuerung durch das Motorsteuergerät und einer durch den Bremskraftverstärker initiierten, mittelbaren Ansteuerung unterschieden wird. Es ist also über eine selbständige, unmittelbare Ansteuerung der elektrischen Maschine durch das Motorsteuergerät ein im Wesentlichen gleich hoher Betrag an elektrischer Leistung rekuperierbar, wie über eine durch den Bremskraftverstärker initiierte, mittelbare Ansteuerung der elektrischen Maschine. Das Motorsteuergerät kann ohne eine aktive Ansteuerung durch den Bremskraftverstärker im Wesentlichen genauso viel elektrische Leistung wiedergewinnen, wie mit einer Ansteuerung durch den Bremskraftverstärker. Das hat den Vorteil, dass so eine besonders effektive Schubrekuperation realisiert wird, bei welcher auch ohne ein Betätigen des Bremskraftverstärkers eine besonders hohe elektrische Leistung rekuperiert werden kann.

In einer besonders vorteilhaften Ausführungsform ist vorgesehen, dass der Bremskraftverstärker ausgelegt ist, ein von einem Fahrer gewünschtes Bremsmoment aufzuteilen in einen elektrischen Bremsmomentanteil, welcher von einer in den ersten Regelkreis geleiteten Eingangsgröße repräsentiert ist, und in einen hydraulischen Bremsmomentanteil, welcher von einer in den zweiten Regelkreis geleiteten Eingangsgröße repräsentiert ist. Das hat den Vorteil, dass ohne zusätzliche Bauteile eine effektive Rekuperation sowohl in einem Schubbetrieb als auch in einem Bremsbetrieb möglich ist. Für die bei einer Rekuperation aktiven Bauteile wird so nicht zwischen Schub- und Bremsrekuperation unterschieden. Insbesondere sind so Standardfahrdynamikmodule und Standardmotorsteuergeräte verwendbar, welche nur leicht modifiziert werden müssen. Somit ist ein kostengünstigeres und leichteres System realisiert, welches mit weniger Bauteilen die Funktionalität üblicher Systeme zur Rekuperation erbringt.

Insbesondere ist hier vorgesehen, dass der Bremskraftverstärker mit dem Fahrdynamikmodul hydraulisch gekoppelt ist. Das hat den Vorteil, dass ein hydraulisch-mechanischer Durchgriff auf die Radbremsen gewährleistet ist. Somit ist es möglich, die gesetzlichen Auflagen zu Bremsanlagen kostengünstig zu realisieren.

Bevorzugt ist vorgesehen, dass der Bremskraftverstärker und das Fahrdynamikmodul in ein hydraulisches Bremssystem integriert sind, welches insbesondere auch die Radbremsen umfasst, und in das Bremssystem ein aktiver Flüssigkeitsspeicher integriert ist. Insbesondere kann der aktive Speicher hier zwischen dem Bremskraftverstärker und dem Fahrdynamikmodul eingekoppelt sein. Mit diesem Flüssigkeitsspeicher ist eine hydraulische Volumenkompensation erbringbar. Insbesondere kann so das Bremsflüssigkeitsvolumen, welches der über die elektrische Maschine erbrachten Verzögerung entspricht, kompensiert werden. Das hat den Vorteil, dass die Wege und/oder Positionen am Bremspedal immer der sich einstellenden Fahrzeugverzögerung entsprechen.

Insbesondere ist hier vorgesehen, dass der Bremskraftverstärker dazu ausgelegt ist, eine Pedalkraftkompensation durchzuführen, welche dem Teil des von dem Fahrer gewünschten Bremsmoments entspricht, der durch die vom Bremskraftverstärker dem Motorsteuergerät zur Verfügung gestellten Eingangsgröße repräsentiert ist. Das hat den Vorteil, dass die Kraft am Bremspedal immer der tatsächlichen Gesamtverzögerung des Kraftfahrzeugs entspricht, unabhängig davon, wie diese Gesamtverzögerung auf ein elektrisches und hydraulisches Verzögerungsmoment aufgeteilt ist.

Die Erfindung betrifft auch ein Verfahren zum Betreiben eines Kraftfahrzeugs mit einem Steuersystem, welches ein Fahrdynamikmodul, das das Kraftfahrzeug stabilisiert, eine in einem Rekuperationsmodus betreibbare elektrische Maschine, sowie ein Motorsteuergerät, welches die elektrische Maschine in dem Rekuperationsmodus ansteuert, umfasst. Dabei ist das Motorsteuergerät und die elektrische Maschine in einem Vorwärtszweig eines ersten Regelkreises angeordnet und das Motorsteuergerät erhält als Eingangsgröße des ersten Regelkreises mindestens eine die Geschwindigkeit des Kraftfahrzeugs beeinflussende Signalgröße, wobei ein Rückkoppeln einer Ausgangsgröße des ersten Regelkreises über das in einem Rückwärtszweig des ersten Regelkreises angeordnete Fahrdynamikmodul erfolgt.

Die mit Bezug auf das erfindungsgemäße Steuersystem vorgestellten bevorzugten Ausführungsformen und deren Vorteile gelten entsprechend für das erfindungsgemäße Verfahren.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination sondern auch in anderen Kombinationen oder aber in Alleinstellung verwendbar.

Ein Ausführungsbeispiel der Erfindung wird nachfolgend anhand der Figuren erläutert. Dabei zeigen:
- Fig. 1: ein Blockschaltbild eines Steuersystems nach dem Stand der Technik für einen Schubrekuperationsbetrieb;
- Fig. 2: ein Blockschaltbild eines Steuersystems nach dem Stand der Technik für einen Bremsrekuperationsbetrieb;
- Fig. 3: ein Blockschaltbild eines Steuersystems gemäß einer Ausführungsform der Erfindung für einen Schubrekuperationsbetrieb;
- Fig. 4: ein Blockschaltbild eines Steuersystems gemäß einer Ausführungsform der Erfindung für einen Schub- und Bremsrekuperationsbetrieb; sowie
- Fig. 5: eine schematische Darstellung eines Steuersystems gemäß einer Ausführungsform der Erfindung.

In den Figuren werden gleiche oder funktionsgleiche Elemente mit den gleichen Bezugszeichen versehen.

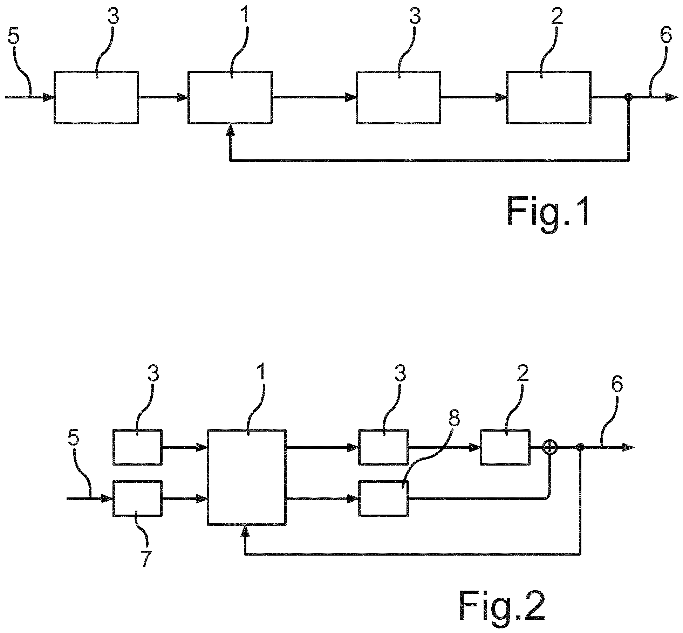

In Fig. 1 ist ein Blockschaltbild eines Steuersystems nach dem Stand der Technik für einen Schubrekuperationsbetrieb dargestellt. Hierbei bietet ein Motorsteuergerät 3 einem Fahrdynamikmodul 1 ein elektrisches Bremsmoment an. Das Motorsteuergerät 3 kann dies selbständig anbieten oder auf Grund einer Eingangsgröße 5, wie beispielsweise ein von-dem-Gas-gehen eines Fahrers eines Kraftwagens sie darstellt. Das Fahrdynamikmodul 1 wird ausgehend von dem Motorsteuergerät 3 angebotenen elektrischen Bremsmoment sowie weiteren, die Stabilität des Kraftfahrzeugs betreffenden, Parametern das Motorsteuergerät 3 anweisen, ein elektrisches Bremsmoment zu erzeugen. Das Motorsteuergerät 3 wird in Folge die elektrische Maschine 2 ansteuern um das elektrische Bremsmoment zu erzielen. Die Ausgangsgröße 6 des Steuersystems repräsentiert dann eine Veränderung der Geschwindigkeit bzw. Beschleunigung des Kraftfahrzeugs. Beispielsweise über Drehzahlsensoren an den Rädern erhält das Fahrdynamikmodul 1 eine Rückkopplung betreffend der Geschwindigkeit oder Beschleunigung des Kraftfahrzeugs und kann das Motorsteuergerät 3 bzw. das elektrische Bremsmoment entsprechend nachregeln.

In Fig. 2 ist ein Blockschaltbild eines Steuersystems nach dem Stand der Technik für einen Bremsrekuperationsmodus dargestellt. Das Fahrdynamikmodul 1 erhält hier wie in Fig. 1 von dem Motorsteuergerät 3 die Information, dass ein elektrisches Bremsmoment zur Verfügung steht. Gleichzeitig wird Information über ein von einem Fahrer des Kraftfahrzeugs erwünschtes Bremsmoment als Eingangsgröße 5 über einen Bremskraftverstärker 7 an das Fahrdynamikmodul weitergeleitet. Das Fahrdynamikmodul 1 kann nun, möglicherweise auch unter Verwendung weiterer Parameter, das von dem Fahrer erwünschte Bremsmoment in ein elektrisch zu erbringendes Bremsmoment und in ein hydraulisch zu erbringendes Bremsmoment aufteilen. Entsprechend werden dann das Motorsteuergerät 3 sowie Radbremsen 8 von dem Fahrdynamikmodul 1 angesteuert.

In Folge erbringt die elektrische Maschine 2 ein elektrisches Bremsmoment und die Radbremsen 8 ein üblicherweise hydraulisches Bremsmoment, welche in Vereinigung das gewünschte Bremsmoment ergeben und so das Kraftfahrzeug verzögern. Somit wird die Ausgangsgröße 6, welche Geschwindigkeit oder Beschleunigung des Kraftfahrzeugs repräsentiert, durch die Eingangsgröße 5, also eine Information über das gewünschte Bremsmoment, verändert. Wie in Fig. 1 erhält das Fahrdynamikmodul 1, beispielsweise über Drehzahlsensoren, eine Rückmeldung über die erfolgte Veränderung der Ausgangsgröße 6 und kann somit die Radbremsen 8 und das Motorsteuergerät 3 regeln.

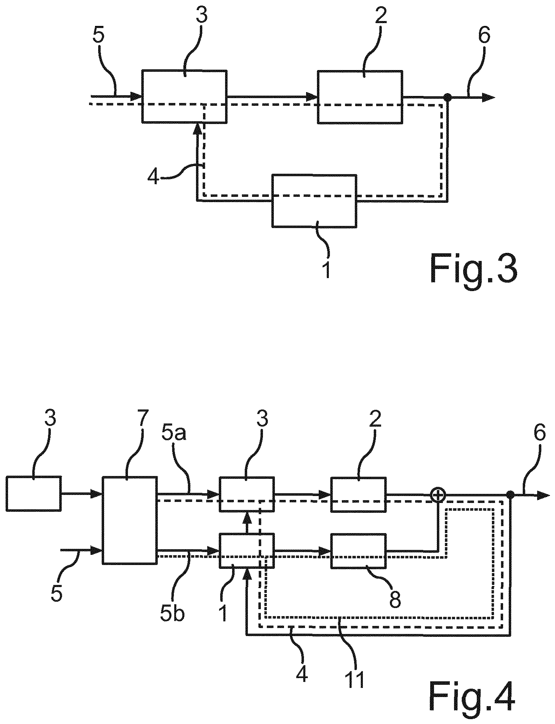

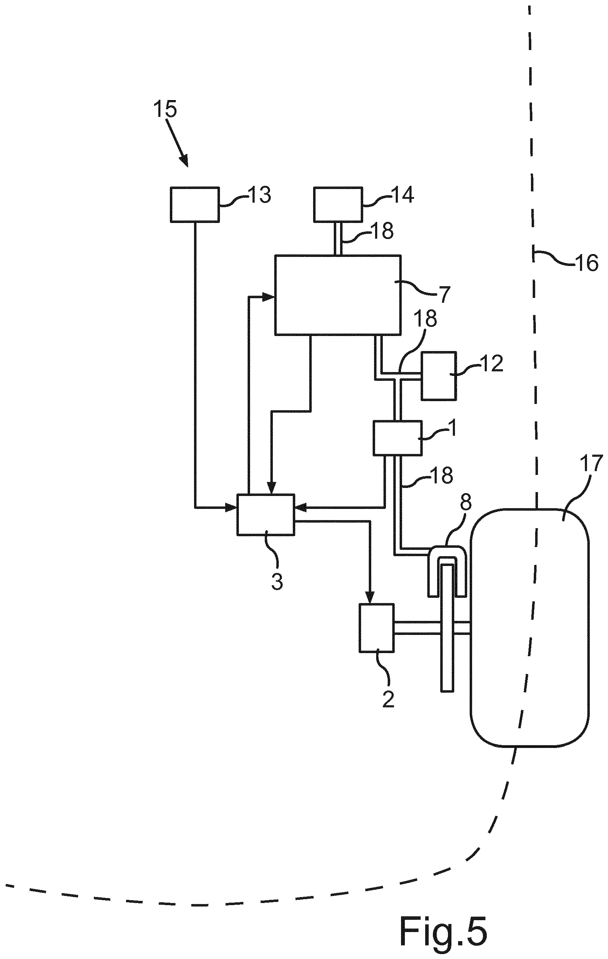

In Fig. 3 ist ein Blockschaltbild eines Steuersystems 15 (Fig. 5) gemäß einer Ausführungsform der Erfindung für eine Schubrekuperation dargestellt. Ein Motorsteuergerät 3 erhält als Eingangsgröße 5 beispielsweise Information über die Position eines Gaspedals oder beispielsweise auch über Einstellungen eines Abstandsregeltempomats. Das Motorsteuergerät 3 kann auf Grundlage dieser Information, möglicherweise aber auch selbständig unter Zuhilfenahme anderer Parameter, die elektrische Maschine 2 ansteuern, damit diese ein elektrisches Bremsmoment erbringt. Dieses wird eine die Geschwindigkeit des Kraftfahrzeugs betreffende Ausgangsgröße 6 verändern und zu einer Rekuperation der Bewegungsenergie des Kraftfahrzeugs führen. Das Motorsteuergerät 3 kann im vorliegenden Beispiel also selbständig eine Rekuperation einleiten. Hierbei ist zu beachten, dass je nach dem Betrag der rekuperierten Leistung unter Umständen die Stabilität des Kraftfahrzeugs gefährdet werden könnte. Sollte dies der Fall sein, wird das Fahrdynamikmodul 1, dessen Aufgabe es ja gerade ist, die Stabilität des Kraftfahrzeugs zu bewahren, das Motorsteuergerät 3 anweisen, die rekuperierte Leistung zu vermindern bzw. zu beschränken. Hierfür muss das Fahrdynamikmodul 1 also lediglich eine spezifische Meldung ausgeben, so dass hier grundsätzlich z.B. ein Standardbauteil zur Verwendung kommen kann. Insgesamt bilden das Motorsteuergerät 3, die elektrische Maschine 2 und das Fahrdynamikmodul 1 also einen ersten Regelkreis 4, der als Eingangsgröße 5 besagte Information aus dem Abstandsregeltempomat bzw. aus der Position des Gaspedals erhält und als Ausgangsgröße 6 eine Signalgröße aufweist, die eine Geschwindigkeit des Kraftfahrzeugs beeinflusst. Wichtig ist hier, dass das Motorsteuergerät 3 und die elektrische Maschine 2 in einem Vorwärtszweig des ersten Regelkreises 4 und das Fahrdynamikmodul 1 in einem Rückwärtszweig des ersten Regelkreises 4 angeordnet sind.
Damit übernimmt das Motorsteuergerät 3 eine Regelfunktion in dem Regelkreis 4.

In Fig. 4 ist ein Blockschaltbild einer weiteren Ausführungsform des Steuersystems 15 (Fig. 5) dargestellt. Im vorliegenden Fall ist es auf eine Rekuperation sowohl im Schub- als auch im Bremsbetrieb abgestimmt. Zusätzlich zu dem ersten Regelkreis 4, welcher wie in der Fig. 3 ein Motorsteuergerät 3, eine elektrische Maschine 2 und ein Fahrdynamikmodul 1 umfasst, ist hier noch ein zweiter Regelkreis 11 sowie ein Bremskraftverstärker 7 vorgesehen. Der Bremskraftverstärker 7 erhält im vorliegenden Beispiel von dem Motorsteuergerät 3 eine Information bzgl. eines maximal verfügbaren elektrischen Bremsmomentes. Gleichzeitig stellt z.B. eine Information über das Bremspedal als Eingangsgröße 5 des Bremskraftverstärkers 7 einen Bremswunsch des Fahrers dar. Der Bremskraftverstärker 7 vergleicht im gezeigten Ausführungsbeispiel das gewünschte Bremsmoment mit dem zur Verfügung stehenden elektrischen Bremsmoment und entscheidet wieviel Bremsmoment elektrisch erbracht wird, also zu einer Rekuperation führt, und wieviel Bremsmoment als hydraulisches Bremsmoment dem Fahrzeug zur Verfügung gestellt wird. Das elektrische Bremsmoment wird von der Eingangsgröße 5a des ersten Regelkreises 4 und das hydraulische Bremsmoment von der Eingangsgröße 5b des zweiten Regelkreises 11 repräsentiert. Es können hier auch weitere Module angeschlossen sein, wie beispielsweise ein hydraulischer Speicher 12 (Fig. 5) für Bremsflüssigkeit. So können ein Zu- oder Abführen von Bremsflüssigkeit Zusatzfunktionen wie ein Konstanthalten von Kräften und Wegen am Bremspedal unabhängig von den jeweils elektrisch und hydraulisch erbrachten Bremsmomenten erfolgen. Dies dient sowohl dem Komfort als auch der Sicherheit, da so für den Fahrer in einer Bremssignalposition stets gleichbleibende Kräfte wahrzunehmen sind. Der erste Regelkreis 4 in der gezeigten Figur ist identisch zu dem in Fig. 3 gezeigten Regelkreis 4, welcher dort wie hier eine Schubrekuperation durchführt. Zusätzlich zu dem Regelkreis 4 ist in der vorliegenden Ausführung des Steuersystems ein zweiter Regelkreis 11 vorhanden. Dieser wird von dem Fahrdynamikmodul 1 und von diesem angesteuerten Radbremsen 8 gebildet. Eingangsgröße 5b von diesem zweiten Regelkreis 11 ist eine Information über das hydraulisch zu erbringende Bremsmoment, welches im vorliegenden Beispiel durch den Bremskraftverstärker 7 angefordert wird.

Nachdem sowohl die Radbremsen 8 als auch die elektrische Maschine 2 einen Einfluss auf die Geschwindigkeit bzw. die Beschleunigung des Kraftfahrzeugs haben, liefern die beiden Regelkreise 4 und 11 eine gemeinsame Ausgangsgröße 6, welche sich auf die Geschwindigkeit bzw. Beschleunigung des Kraftfahrzeugs bezieht. Sowohl das Fahrdynamikmodul 1 als auch die Bremsen 8 sind hier in einem Vorwärtszweig des zweiten Regelkreises 11 angeordnet. Das Fahrdynamikmodul 1 übernimmt hier also in beiden Regelkreisen 4 und 11 nur bei einer eventuellen Destabilisierung des Kraftfahrzeugs eine regelnde Funktion.

Betätigt nun beispielsweise der Fahrer des Kraftfahrzeugs ein Bremspedal, so wird diese Information als Eingangsgröße 5 dem Bremskraftverstärker 7 zur Verfügung gestellt. Dieser vergleicht das gewünschte Bremsmoment mit dem zur Verfügung stehenden elektrischen Bremsmoment. Die Information über das zur Verfügung stehende elektrische Bremsmoment erhält der Bremskraftverstärker 7 im vorliegenden Fall kontinuierlich, es ist jedoch auch ein diskretisierter Informationsfluss möglich. Der Bremskraftverstärker 7 teilt dann das gewünschte Bremsmoment in einen elektrischen und einen hydraulischen Anteil auf. Diese Aufteilung kann sowohl absolut als auch relativ erfolgen. Bevorzugt wird durch den Bremskraftverstärker 7 im Falle eines von Null verschiedenen elektrischen Bremsmoments eine Pedalkraft- bzw. Pedalwegkompensation durchgeführt. Das hat zum Ziel, dass die Kräfte und Wege am Bremspedal immer gleich sind, unabhängig davon, ob über die elektrische Maschine 2 oder über die Radbremsen 8 verzögert wird. In Folge der Aufteilung wird gleichzeitig das Motorsteuergerät 3 die elektrische Maschine 2 anweisen, ein elektrisches Bremsmoment aufzubringen und das Fahrdynamikmodul 1 die Radbremsen 8 dazu anweisen, ein hydraulisches Bremsmoment aufzubauen. Diese beiden Bremsmomente wirken zusammen und realisieren so das vom Fahrer gewünschte Gesamtbremsmoment. Sollte dieses Gesamtbremsmoment nun beispielsweise die Stabilität des Kraftfahrzeugs gefährden, so wird dies von dem Fahrdynamikmodul 1, welches ja genau dazu ausgelegt ist, das Kraftfahrzeug zu stabilisieren, detektiert. In Folge wird das Fahrdynamikmodul 1 das Gesamtbremsmoment, bevorzugt individuell an den einzelnen Rädern, reduzieren. Dies kann zum einen über eine Reduktion des von den Radbremsen 8 erbrachten hydraulischen Bremsmoments erfolgen, oder zum anderen über ein Anweisung an das Motorsteuergerät 3, das elektrische Bremsmoment zu reduzieren.
Für einen effektiven Rekuperationsbetrieb ist es vorteilhaft, zunächst das hydraulische Bremsmoment zu reduzieren. Damit ist im Bremsbetrieb stets eine maximale Rekuperationsleistung gewährleistet.

In Fig. 5 ist eine schematische Darstellung einer weiteren Ausführungsform des Steuersystems 15 dargestellt. Das Steuersystem 15 ist hier in einem Kraftfahrzeug 16 angeordnet. Von dem Kraftfahrzeug 16 ist ein Ausschnitt gezeigt, so dass lediglich ein Rad 17 des Kraftfahrzeugs 16 gezeigt ist, jedoch können auch zusätzliche Räder an das System 15 gekoppelt werden, beispielsweise über weitere Radbremsen 8 oder elektrische Maschinen 2. Im gezeigten Ausschnitt ist das Rad 17 mit einer Radbremse 8 und einer elektrischen Maschine 2 versehen. Die elektrische Maschine 2 empfängt Steuersignale von dem Motorsteuergerät 3. Dieses empfängt seinerseits Signale von einem Gaspedal 13, dem Fahrdynamikmodul 1 und dem Bremskraftverstärker 7. Das Motorsteuergerät 3 übermittelt Information über ein erbringbares elektrisches Bremsmoment der elektrischen Maschine 2 an dem Bremskraftverstärker 7. Die Radbremse 8 ist im vorliegenden Beispiel über ein hydraulisches Bremssystem 18 hydraulisch an das Fahrdynamikmodul 1 gekoppelt. Dieses ist seinerseits wiederum über das hydraulische Bremssystem 18 hydraulisch an den Bremskraftverstärker 7 und einen aktiven Speicher 12 gekoppelt. Der Bremskraftverstärker 7 ist seinerseits über das hydraulische Bremssystem 18 hydraulisch mit einem Bremspedal 14 verbunden. Somit ist durch das hydraulische Bremssystem 18 ein mechanischer Durchgriff von dem Bremspedal 14 auf die Radbremse 8 gewährleistet.

Befindet sich das Kraftfahrzeug 16 nun in einem Fahrbetrieb, wird beispielsweise der Fahrer in einer bestimmten Situation vom Gaspedal 13 gehen. Das Motorsteuergerät 3 wird dann, sofern eine elektrisches Bremsmoment verfügbar ist, der elektrischen Maschine signalisieren, ein solches elektrisches Bremsmoment aufzubauen. In Folge wird elektrische Leistung rekuperiert.
Sollte diese Rekuperation aufgrund vorherrschender Bedingungen, wie beispielsweise äußeren Umwelteinflüssen, die Stabilität des Kraftfahrzeugs 16 gefährden, so wird das Fahrdynamikmodul 1 das Motorsteuergerät 3 anweisen, die Rekuperation zu reduzieren bzw. zu unterbinden. Sollte der Fahrer des Kraftfahrzeugs 16 in der Zwischenzeit das Fahrzeug weiter verlangsamen wollen, so wird er ein Bremspedal 14 betätigen. Damit wird auch der Bremskraftverstärker 7 aktiviert. Sollte nun beispielsweise das Bremspedal 14 nur leicht betätigt worden sein, so kann das angeforderte Bremsmoment ggf. durch die elektrische Rekuperation alleine aufgebracht werden.
Dies kann der Bremskraftverstärker 7 entscheiden, da er von dem Motorsteuergerät 3 über das erbringbare elektrische Bremsmoment informiert ist. Somit kann der Bremskraftverstärker 7

## Patentansprüche

1. Steuersystem (15) zum Betreiben eines Kraftfahrzeugs (16) mit
- einem Fahrdynamikmodul (1), das ausgelegt ist das Kraftfahrzeug (16) zu stabilisieren,
- einer elektrischen Maschine (2), die in einem Rekuperationsmodus betreibbar ist, in dem ein veränderlicher Betrag an elektrischer Leistung rekuperierbar ist, sowie
- einem Motorsteuergerät (3), das ausgelegt ist, die elektrische Maschine (2) in dem Rekuperationsmodus anzusteuern,
wobei das Motorsteuergerät (3) und die elektrische Maschine (2) in einem Vorwärtszweig eines ersten Regelkreises (4) angeordnet sind,
wobei eine Eingangsgröße des ersten Regelkreises (4) mindestens eine, die Geschwindigkeit des Kraftfahrzeugs beeinflussende, Signalgröße (5) darstellt,
wobei das Fahrdynamikmodul (1) in einem Rückwärtszweig des ersten Regelkreises (4) angeordnet ist,
**dadurch gekennzeichnet, dass** mittels des Motorsteuergeräts (3) eine von der elektrischen Maschine (2) wiedergewonnene elektrische Leistung, die durch die elektrische Maschine (2) dem Kraftfahrzeug (16) wieder zuführbar ist, regelbar ist.

2. Steuersystem (15) nach Anspruch 1,
**dadurch gekennzeichnet, dass**
der erste Regelkreis (4) ausgebildet ist, in einem Betriebsmodus betrieben zu werden, in dem durch ein Verändern der im Rekuperationsmodus der elektrischen Maschine (2) zurückgewonnenen Leistung eine Ausgangsgröße (6) des ersten Regelkreises geregelt wird.

3. Steuersystem (15) nach einem der vorhergehenden Ansprüche,
**dadurch gekennzeichnet, dass**
- ein Bremskraftverstärker (7) vor dem Vorwärtszweig des ersten Regelkreises (4) angeordnet ist,
und der Bremskraftverstärker (7) ausgelegt ist, dem Motorsteuergerät (3) eine Eingangsgröße (5a) zur Verfügung zu stellen, welche zumindest einen Teil eines von einem Fahrer gewünschten Bremsmoments repräsentiert.

4. Steuersystem (15) nach Anspruch 3,
**dadurch gekennzeichnet, dass**
das Motorsteuergerät (3) ausgelegt ist, eine Information über ein mittels des Rekuperationsmodus der elektrischen Maschine (2) erzielbares elektrisches Bremsmoment an den Bremskraftverstärker (7) zu übermitteln.

5. Steuersystem (15) nach einem der Ansprüche 3 bis 4,
**dadurch gekennzeichnet, dass**
der Bremskraftverstärker (7) ausgelegt ist, auch dem Fahrdynamikmodul (1) eine Eingangsgröße (5b) zur Verfügung zu stellen, welche zumindest einen Teil eines von einem Fahrer gewünschten Bremsmoments repräsentiert.

6. Steuersystem (15) nach einem der Ansprüche 3 bis 5,
**dadurch gekennzeichnet, dass**
der Rekuperationsmodus der elektrischen Maschine (2) und auch das Motorsteuergerät (3) derart ausgebildet sind, dass im Rekuperationsmodus nicht zwischen einer selbstständigen, unmittelbaren Ansteuerung der elektrischen Maschine (2) durch das Motorsteuergerät (3) und einer durch den Bremskraftverstärker (7) initiierten, mittelbaren Ansteuerung unterschieden wird.

7. Steuersystem (15) nach einem der Ansprüche 3 bis 6,
**dadurch gekennzeichnet, dass**
das Fahrdynamikmodul (1) in einem Vorwärtszweig eines zweiten Regelkreises (11) angeordnet ist, wobei eine Eingangsgröße (5b) des zweiten Regelkreises (11) zumindest einen Teil eines von einem Fahrer gewünschten Bremsmoments repräsentiert.

8. Steuersystem (15) nach Anspruch 7,
**dadurch gekennzeichnet, dass**
der Bremskraftverstärker (7) ausgelegt ist, ein von einem Fahrer gewünschtes Bremsmoment aufzuteilen in einen elektrischen Bremsmomentanteil, welcher von einer in den ersten Regelkreis (4) geleiteten Eingangsgröße (5a) repräsentiert ist, und einen hydraulischen Bremsmomentanteil, welcher von einer in den zweiten Regelkreis (11) geleiteten Eingangsgröße (5b) repräsentiert ist.

9. Steuersystem (15) nach einem der Ansprüche 3 bis 8,
**dadurch gekennzeichnet, dass**
der Bremskraftverstärker (7) mit dem Fahrdynamikmodul (1) hydraulisch gekoppelt ist.

10. Steuersystem (15) nach einem der Ansprüche 3 bis 9,
**dadurch gekennzeichnet, dass**
der Bremskraftverstärker (7) und das Fahrdynamikmodul (1) Bestandteil eines hydraulischen Bremssystems (18) sind und zwischen dem Bremskraftverstärker (7) und dem Fahrdynamikmodul (1) ein aktiver Speicher (12) für Flüssigkeit integriert ist, mittels welchem eine hydraulische Volumenkompensation erbringbar ist.

11. Steuersystem (15) nach einem der Ansprüche 3 bis 10,
**dadurch gekennzeichnet, dass**
der Bremskraftverstärker (7) dazu ausgelegt ist, eine Pedalkraftkompensation durchzuführen, welche dem Teil des von dem Fahrer gewünschten Bremsmoments entspricht, der durch die vom Bremskraftverstärker (7) dem Motorsteuergerät (3) zu Verfügung gestellten Eingangsgröße repräsentiert ist.

12. Verfahren zum Betreiben eines Kraftfahrzeugs (16) mit einem Steuersystem (15), welches
- ein Fahrdynamikmodul (1), welches das Kraftfahrzeug (16) stabilisiert,
- eine in einem Rekuperationsmodus betreibbare elektrischen Maschine (2), sowie
- ein Motorsteuergerät (3), welches die elektrische Maschine (2) in dem Rekuperationsmodus ansteuert, umfasst,
wobei das Motorsteuergerät (3) und die elektrische Maschine (2) in einem Vorwärtszweig eines ersten Regelkreises (4) angeordnet sind und
wobei das Motorsteuergerät (3) als Eingangsgröße (5) des ersten Regelkreises (4) mindestens eine die Geschwindigkeit des Kraftfahrzeugs beeinflussende Signalgröße (5) erhält, mit einem
Rückkoppeln einer Ausgangsgröße (6) des ersten Regelkreises (4) über das in einem Rückwärtszweig des ersten Regelkreises (4) angeordnete Fahrdynamikmodul (1) **dadurch gekennzeichnet, dass**
mittels des Motorsteuergeräts (3) eine von der elektrischen Maschine (2) wiedergewonnene elektrische Leistung, die durch die elektrische Maschine (2) dem Kraftfahrzeug (16) wieder zugeführt wird, geregelt wird.
Fahrdynamikmodul (1) ein aktiver Speicher (12) für Flüssigkeit integriert ist, mittels welchem eine hydraulische Volumenkompensation erbringbar ist.

11. Steuersystem (15) nach einem der Ansprüche 3 bis 10,
**dadurch gekennzeichnet, dass**
der Bremskraftverstärker (7) dazu ausgelegt ist, eine Pedalkraftkompensation durchzuführen, welche dem Teil des von dem Fahrer gewünschten Bremsmoments entspricht, der durch die vom Bremskraftverstärker (7) dem Motorsteuergerät (3) zu Verfügung gestellten Eingangsgröße repräsentiert ist.

12. Verfahren zum Betreiben eines Kraftfahrzeugs (16) mit einem Steuersystem (15), welches
- ein Fahrdynamikmodul (1), welches das Kraftfahrzeug (16) stabilisiert,
- eine in einem Rekuperationsmodus betreibbare elektrischen Maschine (2), sowie
- ein Motorsteuergerät (3), welches die elektrische Maschine (2) in dem Rekuperationsmodus ansteuert, umfasst,
wobei das Motorsteuergerät (3) und die elektrische Maschine (2) in einem Vorwärtszweig eines ersten Regelkreises (4) angeordnet sind und
wobei das Motorsteuergerät (3) als Eingangsgröße (5) des ersten Regelkreises (4) mindestens eine die Geschwindigkeit des Kraftfahrzeugs beeinflussende Signalgröße (5) erhält,
**gekennzeichnet durch** den Schritt
eines Rückkoppelns einer Ausgangsgröße (6) des ersten Regelkreises (4) über das in einem Rückwärtszweig des ersten Regelkreises (4) angeordnete Fahrdynamikmodul (1).

## Claims

1. Control system (15) for operating a motor vehicle (16),
- comprising a driving dynamics module (1) which is designed to stabilize the motor vehicle (16),
- an electrical machine (2) which can be operated in a recuperation mode in which a variable amount of electrical power can be recuperated, and also
- an engine control device (3) which is designed to actuate the electrical machine (2) in the recuperation mode,
wherein the engine control device (3) and the electrical machine (2) are arranged in a forward path of a first control loop (4),
wherein an input variable of the first control loop (4) constitutes at least one signal variable (5) which influences the speed of the motor vehicle,
wherein the driving dynamics module (1) is arranged in a backward path of the first control loop (4), **characterized in that** an electrical power which is recovered by the electrical machine (2) and can be supplied by the electrical machine (2) to the motor vehicle (16) again can be controlled by means of the engine control device (3).

2. Control system (15) according to Claim 1,
**characterized in that**
the first control loop (4) is designed to be operated in an operating mode in which an output variable (6) of the first control loop is controlled by changing the power which is recovered in the recuperation mode of the electrical machine (2).

3. Control system (15) according to either of the preceding claims,
**characterized in that**
- a braking force amplifier (7) is arranged in front of the forward path of the first control loop (4),
and the braking force amplifier (7) is designed to provide the engine control device (3) with an input variable (5a) which represents at least a portion of a braking torque which is desired by a driver.

4. Control system (15) according to Claim 3,
**characterized in that**
the engine control device (3) is designed to transmit to the braking force amplifier (7) an item of information about an electrical braking torque which can be achieved by means of the recuperation mode of the electrical machine (2).

5. Control system (15) according to either of Claims 3 and 4,
**characterized in that**
the braking force amplifier (7) is designed to also provide the driving dynamics module (1) with an input variable (5b) which represents at least a portion of a braking torque which is desired by a driver.

6. Control system (15) according to one of Claims 3 to 5,
**characterized in that**
the recuperation mode of the electrical machine (2) and also the engine control device (3) are designed in such a way that, in the recuperation mode, no distinction is made between autonomous, direct actuation of the electrical machine (2) by the engine control device (3) and indirect actuation which is initiated by the braking force amplifier (7).

7. Control system (15) according to one of Claims 3 to 6,
**characterized in that**
the driving dynamics module (1) is arranged in a forward path of a second control loop (11), wherein an input variable (5b) of the second control loop (11) represents at least a portion of a braking torque which is desired by a driver.

8. Control system (15) according to Claim 7,
**characterized in that**
the braking force amplifier (7) is designed to split a braking torque which is desired by a driver into an electrical braking torque component, which is represented by an input variable (5a) which is conducted into the first control loop (4), and a hydraulic braking torque component, which is represented by an input variable (5b) which is conducted into the second control loop (11).

9. Control system (15) according to one of Claims 3 to 8,
**characterized in that**
the braking force amplifier (7) is hydraulically coupled to the driving dynamics module (1).

10. Control system (15) according to one of Claims 3 to 9,
**characterized in that**
the braking force amplifier (7) and the driving dynamics module (1) are constituent parts of a hydraulic braking system (18) and an active storage device (12) for liquid is integrated between the braking force amplifier (7) and the driving dynamics module (1), it being possible for hydraulic volume compensation to be provided by means of the said active storage device.

11. Control system (15) according to one of Claims 3 to 10,
**characterized in that**
the braking force amplifier (7) is designed to carry out a pedal force compensation operation which corresponds to the portion of the braking torque which is desired by the driver which is represented by the input variable which is provided to the engine control device (3) by the braking force amplifier (7).

12. Method for operating a motor vehicle (16) comprising a control system (15) which comprises
- a driving dynamics module (1) which stabilizes the motor vehicle (16),
- an electrical machine (2) which can be operated in a recuperation mode, and also
- an engine control device (3) which actuates the electrical machine (2) in the recuperation mode, wherein the engine control device (3) and the electrical machine (2) are arranged in a forward path of a first control loop (4), and
wherein the engine control device (3) receives, as input variable (5) of the first control loop (4), at least one signal variable (5) which influences the speed of the motor vehicle, comprising
feedback of an output variable (6) of the first control loop (4) via the driving dynamics module (1) which is arranged in a backward path of the first control loop (4),
**characterized in that**
an electrical power which is recovered by the electrical machine (2) and which is supplied by the electrical machine (2) to the motor vehicle (16) again is controlled by means of the engine control device (3) .

## Revendications

1. Système de commande (15) pour faire fonctionner un véhicule automobile (16), comprenant
- un module de dynamique de conduite (1) qui est conçu pour stabiliser le véhicule automobile (16),
- une machine électrique (2) qui peut fonctionner dans un mode de récupération dans lequel peut être récupéré un montant variable de puissance électrique, et
- un module de commande de moteur (3) qui est conçu pour piloter la machine électrique (2) dans le mode de récupération,
le module de commande de moteur (3) et la machine électrique (2) étant disposés dans une branche vers l'avant d'un premier circuit de régulation (4),
une grandeur d'entrée du premier circuit de régulation (4) représentant au moins une grandeur de signal (5) qui influence la vitesse du véhicule automobile,
le module de dynamique de conduite (1) étant disposé dans une branche vers l'arrière du premier circuit de régulation (4),
**caractérisé en ce qu'**une puissance électrique récupérée par la machine électrique (2), laquelle peut être réacheminée au véhicule automobile (16) par la machine électrique (2), peut être régulée au moyen du module de commande de moteur (3).

2. Système de commande (15) selon la revendication 1, **caractérisé en ce que** le premier circuit de régulation (4) est configuré pour fonctionner dans un premier mode de fonctionnement, dans lequel une grandeur de sortie (6) du premier circuit de régulation est régulée par une modification de la puissance récupérée en mode de récupération de la machine électrique (2).

3. Système de commande (15) selon l'une des revendications précédentes, **caractérisé en ce que**
- un servofrein (7) est disposé devant la branche vers l'avant du premier circuit de régulation (4),
et le servofrein (7) est conçu pour mettre à la disposition du module de commande de moteur (3) une grandeur d'entrée (5a) qui représente au moins une partie d'un moment de freinage souhaité par un conducteur.

4. Système de commande (15) selon la revendication 1, **caractérisé en ce que** le module de commande de moteur (3) est conçu pour communiquer au servofrein (7) une information à propos du moment de freinage électrique qui peut être obtenu au moyen du mode de récupération de la machine électrique (2).

5. Système de commande (15) selon l'une des revendications 3 à 4, **caractérisé en ce que** le servofrein (7) est conçu pour mettre également à disposition du module de dynamique de conduite (1) une grandeur d'entrée (5b) qui représente au moins une partie d'un moment de freinage souhaité par un conducteur.

6. Système de commande (15) selon l'une des revendications 3 à 5, **caractérisé en ce que** le mode de récupération de la machine électrique (2) et aussi le module de commande de moteur (3) sont configurés de telle sorte que dans le mode de récupération, il n'y a pas de distinction entre un pilotage autonome direct de la machine électrique (2) par le module de commande de moteur (3) et un pilotage indirect initié par le servofrein (7) .

7. Système de commande (15) selon l'une des revendications 3 à 6, **caractérisé en ce que** le module de dynamique de conduite (1) est disposé dans une branche vers l'avant d'un deuxième circuit de régulation (11), une grandeur d'entrée (5b) du deuxième circuit de régulation (11) représentant au moins une partie d'un moment de freinage souhaité par un conducteur.

8. Système de commande (15) selon la revendication 7, **caractérisé en ce que** le servofrein (7) est conçu pour diviser un moment de freinage souhaité par un conducteur en une part de moment de freinage électrique, laquelle est représentée par une grandeur d'entrée (5a) dirigée dans le premier circuit de régulation (4), et une part de moment de freinage hydraulique, laquelle est représentée par une grandeur d'entrée (5b) dirigée dans le deuxième circuit de régulation (11).

9. Système de commande (15) selon l'une des revendications 3 à 8, **caractérisé en ce que** le servofrein (7) est couplé hydrauliquement avec le module de dynamique de conduite (1).

10. Système de commande (15) selon l'une des revendications 3 à 9, **caractérisé en ce que** le servofrein (7) et le module de dynamique de conduite (1) sont des éléments constitutifs d'un système de freinage hydraulique (18) et un accumulateur actif (12) pour un liquide est disposé entre le servofrein (7) et le module de dynamique de conduite (1), lequel permet d'apporter une compensation de volume hydraulique.

11. Système de commande (15) selon l'une des revendications 3 à 10, **caractérisé en ce que** le servofrein (7) est conçu pour effectuer une compensation de force de pédale, laquelle correspond à la partie du moment de freinage souhaité par un conducteur, qui est représentée par la grandeur d'entrée mise à disposition du module de commande de moteur (3) par le servofrein (7).

12. Procédé pour faire fonctionner un véhicule automobile (16) équipé d'un système de commande (15), qui comporte
- un module de dynamique de conduite (1) qui stabilise le véhicule automobile (16),
- une machine électrique (2) qui peut fonctionner dans un mode de récupération, et
- un module de commande de moteur (3) qui pilote la machine électrique (2) dans le mode de récupération,
le module de commande de moteur (3) et la machine électrique (2) étant disposés dans une branche vers l'avant d'un premier circuit de régulation (4),
le module de commande de moteur (3) recevant comme grandeur d'entrée (5) du premier circuit de régulation (4) au moins une grandeur de signal (5) qui influence la vitesse du véhicule automobile, avec une
rétroaction d'une grandeur de sortie (6) du premier circuit de régulation (4) par le biais du module de dynamique de conduite (1) disposé dans une branche vers l'arrière du premier circuit de régulation (4), **caractérisé en ce que**
une puissance électrique récupérée par la machine électrique (2), laquelle est réacheminée au véhicule automobile (16) par la machine électrique (2), est régulée au moyen du module de commande de moteur (3).
